# EUROPEAN PATENT APPLICATION

(11) **EP 4 776 229 A1**
(43) Date of publication of application: **15.07.2026**
(21) Application number: 25198387.0
(22) Date of filing: 27.08.2025
(51) Int. Cl.: G06T 15/00

(54) **PRIMITIVE ADAPTIVE VARIABLE RATE SHADING**

(30) Priority: 09.01.2025 US 202519014238
(71) Applicant: MEDIATEK INC., Hsinchu City 30078 (TW)
(72) Inventor: LUO, Chengping, San Jose, 95134 (US); TSAO, You-Ming, 30078 Hsinchu City (TW); WANG, Huei-Long, 30078 Hsinchu City (TW); LIN, Shih-Chin, 30078 Hsinchu City (TW); CHEN, Ying-Chieh, 30078 Hsinchu City (TW); HUANG, Sheng-Wen, 30078 Hsinchu City (TW)
(74) Representative: Hoefer & Partner Patentanwälte mbB

(57) **Abstract**

A primitive adaptive variable rate shading method includes generating a first absolute difference of depths in x direction (S202), generating a second absolute difference of depths in y direction (S204), adding the first absolute difference with the second absolute difference to generate a third absolute difference (S206), and setting the variable shading rate according to at least the plurality of thresholds, and the third absolute difference (S208).

## Description

### Background

Variable rate shading (VRS) is a mechanism to enable fragment shading at various rates across the rendered image. With variable rate shading, a group of pixels can be shaded as a single unit and the result is then broadcasted to all samples in the group. Variable rate shading can significantly reduce fragment shader invocation rate and improve the performance of 3-dimensional (3D) application. Variable rate shading reduces the shading rate of fragment shader, causing aliasing. Therefore, a solution which benefits from variable rate shading but avoids the side effect of variable rate shading is needed.

### Summary

A method according to the invention is defined in independent claim 1. The dependent claims define preferred embodiments thereof. A primitive adaptive variable rate shading method includes generating a first absolute difference of depths in x direction, generating a second absolute difference of depths in y direction, adding the first absolute difference with the second absolute difference to generate a third absolute difference, and setting the variable shading rate according to at least the plurality of thresholds, and the third absolute difference.

These and other objectives of the present invention will no doubt become obvious to those of ordinary skill in the art after reading the following detailed description of the preferred embodiment that is illustrated in the various figures and drawings.

### Brief Description of the Drawings

FIG.1 shows a helmeted image with a sensitive region and a non-sensitive region according to an embodiment of the present invention.
FIG.2 is a flow chart of a primitive adaptive variable rate shading method according to an embodiment of the present invention.

### Detailed Description

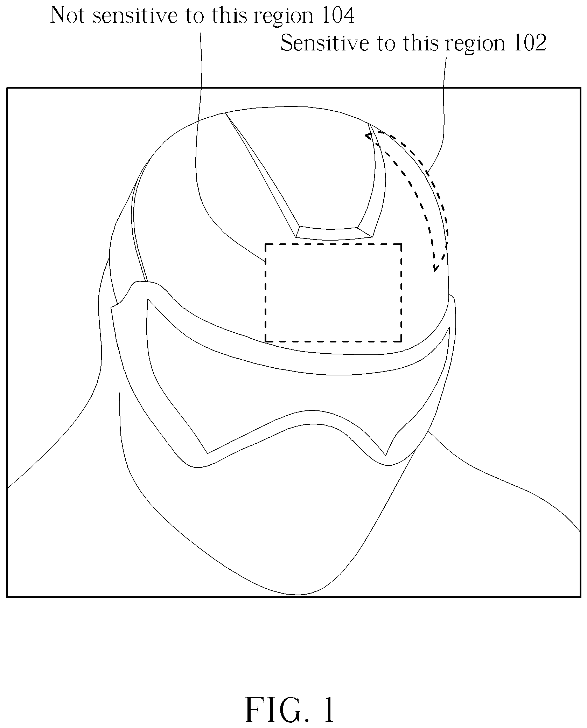

FIG.1 shows a helmeted image with a sensitive region 102 and a non-sensitive region 104 according to an embodiment of the present invention. In a 3-dimensional (3D) application, the colors of pixels in the non-sensitive region 104 of the helmet are similar, thus shall adapt a higher rate of variable rate shading (e.g. 4-pixel by 4-pixel), which means a same color can be applied to a larger patch of area. This allows a single color helmet to be drawn more efficiently. In addition, the sensitive region 102 should be drawn pixel by pixel because the sensitive region 102 includes the background (e.g. the sky or the wall) and the helmet, thus shall adapt a lower rate of variable rate shading (e.g. 1-pixel by 1-pixel or 1-pixel by 2-pixel), which means a same color can only be applied to a small patch of area. The sensitive region 102 is more sensitive in horizontal direction (x-axis) than in vertical direction (y-axis) because the difference of depths is more significant in horizontal direction. Therefore, the rate of variable rate shading can be 1-pixel by 1-pixel or 1-pixel by 2-pixel (more sensitive in horizontal direction). In this way, the features of the sensitive region 102 can be retained by applying adaptive variable rate shading.

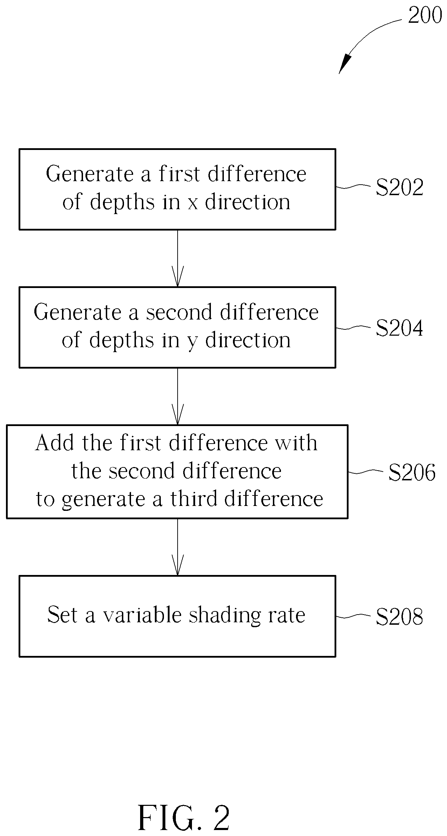

FIG.2 is a flow chart 200 of a primitive adaptive variable rate shading method according to an embodiment of the present invention.

| | |
|---|---|
| Step 202: | Generate a first absolute difference of depths in x direction; |
| Step 204: | Generate a second absolute difference of depths in y direction; |
| Step 206: | Add the first absolute difference with the second |
| | absolute difference to generate a third absolute difference; |
| Step 208: | Set a variable shading rate according to at least a plurality of thresholds, and the third absolute difference. |

In an embodiment, the plurality of thresholds may include a 2-pixel by 1-pixel threshold, a 2-pixel by 2-pixel threshold, a 4-pixel by 2-pixel threshold, and a 4-pixel by 4-pixel threshold. At first, set a final variable shading rate as 4-pixel by 4-pixel, 4-pixel by 2-pixel, 2-pixel by 2-pixel, or 2-pixel by 1-pixel.

In an alternative, the final variable shading rate is set as 4-pixel by 4-pixel, and the third absolute difference is compared with the plurality of thresholds. If the third absolute difference is larger than the 2-pixel by 1-pixel threshold, set the variable shading rate as 1-pixel by 1-pixel. If the third absolute difference is between the 2-pixel by 2-pixel threshold and the 2-pixel by 1-pixel threshold, and the first absolute difference is larger than the second absolute difference, set the variable shading rate as 1-pixel by 2-pixel. If the third absolute difference is between the 2-pixel by 2-pixel threshold and the 2-pixel by 1-pixel threshold, and the first absolute difference is smaller than the second absolute difference, set the variable shading rate as 2-pixel by 1-pixel. If the third absolute difference is between the 4-pixel by 2-pixel threshold and the 2-pixel by 2-pixel threshold, set the variable shading rate as 2-pixel by 2-pixel. If the third absolute difference is between the 4-pixel by 4-pixel threshold and the 4-pixel by 2-pixel threshold, and the first absolute difference is larger than the second absolute difference, set the variable shading rate as 2-pixel by 4-pixel. If the third absolute difference is between the 4-pixel by 4-pixel threshold and the 4-pixel by 2-pixel threshold, and the first absolute difference is smaller than the second absolute difference, set the variable shading rate as 4-pixel by 2-pixel. If the third absolute difference is smaller than the 4-pixel by 4-pixel threshold, set the variable shading rate as 4-pixel by 4-pixel.

In another alternative, the final variable shading rate is set as 4-pixel by 2-pixel, and the third absolute difference is compared with the plurality of thresholds. If the third absolute difference is larger than the 2-pixel by 1-pixel threshold, set the variable shading rate as 1-pixel by 1-pixel. If the third absolute difference is between the 2-pixel by 2-pixel threshold and the 2-pixel by 1-pixel threshold, and the first absolute difference is larger than the second absolute difference, set the variable shading rate as 1-pixel by 2-pixel. If the third absolute difference is between the 2-pixel by 2-pixel threshold and the 2-pixel by 1-pixel threshold, and the first absolute difference is smaller than the second absolute difference, set the variable shading rate as 2-pixel by 1-pixel. If the third absolute difference is between the 4-pixel by 2-pixel threshold and the 2-pixel by 2-pixel threshold, set the variable shading rate as 2-pixel by 2-pixel. If the third absolute difference is smaller than the 4-pixel by 2-pixel threshold, and the first absolute difference is larger than the second absolute difference, set the variable shading rate as 2-pixel by 4-pixel. If the third absolute difference is smaller than the 4-pixel by 2-pixel threshold, and the first absolute difference is smaller than the second absolute difference, set the variable shading rate as 4-pixel by 2-pixel.

In another alternative, the final variable shading rate is set as 2-pixel by 2-pixel, and the third absolute difference is compared with the plurality of thresholds. If the third absolute difference is larger than the 2-pixel by 1-pixel threshold, set the variable shading rate as 1-pixel by 1-pixel. If the third absolute difference is between the 2-pixel by 2-pixel threshold and the 2-pixel by 1-pixel threshold, and the first absolute difference is larger than the second absolute difference, set the variable shading rate as 1-pixel by 2-pixel. If the third absolute difference is between the 2-pixel by 2-pixel threshold and the 2-pixel by 1-pixel threshold, and the first absolute difference is smaller than the second absolute difference, set the variable shading rate as 2-pixel by 1-pixel. If the third absolute difference is smaller than the 2-pixel by 2-pixel threshold, set the variable shading rate as 2-pixel by 2-pixel.

In another alternative, the final variable shading rate is set as 2-pixel by 1-pixel, and the third absolute difference is compared with the plurality of thresholds. If the third absolute difference is larger than the 2-pixel by 1-pixel threshold, set the variable shading rate as 1-pixel by 1-pixel. If the third absolute difference is smaller than the 2-pixel by 1-pixel threshold, and the first absolute difference is larger than the second absolute difference, set the variable shading rate as 1-pixel by 2-pixel. If the third absolute difference is smaller than the 2-pixel by 1-pixel threshold, and the first absolute difference is smaller than the second absolute difference, set the variable shading rate as 2-pixel by 1-pixel.

The conditions are descripted and discussed from 1-pixel by 1-pixel to 4-pixel by 4-pixel. However, Step 208 is not limited to from 1-pixel by 1-pixel to 4-pixel by 4-pixel but can be applied in a general manner. Further, the above alternatives might be combined in the embodiment.

In conclusion, the method of primitive adaptive variable rate shading can be performed in an efficient manner and also can avoid the side effects of variable rate shading because the variable shading rate is chosen adaptively. That is, one color can be drawn in a small area like 1-pixel by 2-pixel or drawn in a large area such as 4-pixel by 4-pixel.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A primitive adaptive variable rate shading method, comprising:
generating a first absolute difference of depths in x direction (S202);
generating a second absolute difference of depths in y direction (S204);
adding the first absolute difference with the second absolute difference to generate a third absolute difference (S206) ; and
setting a variable shading rate at least according to a plurality of thresholds, and the third absolute difference (S208).

2. The primitive adaptive variable rate shading method of claim 1, wherein the plurality of thresholds comprise:
a 2-pixel by 1-pixel threshold, a 2-pixel by 2-pixel threshold, a 4-pixel by 2-pixel threshold, and a 4-pixel by 4-pixel threshold.

3. The primitive adaptive variable rate shading method of claim 2, further comprising:
setting a final variable shading rate as 4-pixel by 4-pixel, 4-pixel by 2-pixel, 2-pixel by 2-pixel, or 2-pixel by 1-pixel.

4. The primitive adaptive variable rate shading method of claim 3, wherein setting the variable shading rate according to at least the plurality of thresholds, and the third absolute difference is if the final variable shading rate is set as 4-pixel by 4-pixel, and the third absolute difference is larger than the 2-pixel by 1-pixel threshold, setting the variable shading rate as 1-pixel by 1-pixel.

5. The primitive adaptive variable rate shading method of claim 3 or 4, wherein setting the variable shading rate according to at least the plurality of thresholds, and the third absolute difference is if the final variable shading rate is set as 4-pixel by 4-pixel, the third absolute difference is between the 2-pixel by 2-pixel threshold and the 2-pixel by 1-pixel threshold, and the first absolute difference is larger than the second absolute difference, setting the variable shading rate as 1-pixel by 2-pixel.

6. The primitive adaptive variable rate shading method of any one of claims 3 to 5, wherein setting the variable shading rate according to at least the plurality of thresholds, and the third absolute difference is if the final variable shading rate is set as 4-pixel by 4-pixel, the third absolute difference is between the 2-pixel by 2-pixel threshold and the 2-pixel by 1-pixel threshold, and the first absolute difference is smaller than the second absolute difference, setting the variable shading rate as 2-pixel by 1-pixel.

7. The primitive adaptive variable rate shading method of any one of claims 3 to 6, wherein setting the variable shading rate according to at least the plurality of thresholds, and the third absolute difference is if the final variable shading rate is set as 4-pixel by 4-pixel, and the third absolute difference is between the 4-pixel by 2-pixel threshold and the 2-pixel by 2-pixel threshold, setting the variable shading rate as 2-pixel by 2-pixel.

8. The primitive adaptive variable rate shading method of any one of claims 3 to 7, wherein setting the variable shading rate according to at least the plurality of thresholds, and the third absolute difference is if the final variable shading rate is set as 4-pixel by 4-pixel, the third absolute difference is between the 4-pixel by 4-pixel threshold and the 4-pixel by 2-pixel threshold, and the first absolute difference is larger than the second absolute difference, setting the variable shading rate as 2-pixel by 4-pixel.

9. The primitive adaptive variable rate shading method of any one of claims 3 to 8, wherein setting the variable shading rate according to at least the plurality of thresholds, and the third absolute difference is if the final variable shading rate is set as 4-pixel by 4-pixel, the third absolute difference is between the 4-pixel by 4-pixel threshold and the 4-pixel by 2-pixel threshold, and the first absolute difference is smaller than the second absolute difference, setting the variable shading rate as 4-pixel by 2-pixel.

10. The primitive adaptive variable rate shading method of any one of claims 3 to 9, wherein setting the variable shading rate according to at least the plurality of thresholds, and the third absolute difference is if the final variable shading rate is set as 4-pixel by 4-pixel, and the third absolute difference is smaller than the 4-pixel by 4-pixel threshold, setting the variable shading rate as 4-pixel by 4-pixel.

11. The primitive adaptive variable rate shading method of any one of claims 3 to 10, wherein setting the variable shading rate according to at least the plurality of thresholds, and the third absolute difference is if the final variable shading rate is set as 4-pixel by 2-pixel, and the third absolute difference is larger than the 2-pixel by 1-pixel threshold, setting the variable shading rate as 1-pixel by 1-pixel.

12. The primitive adaptive variable rate shading method of any one of claims 3 to 11, wherein setting the variable shading rate according to at least the plurality of thresholds, and the third absolute difference is:
- if the final variable shading rate is set as 4-pixel by 2-pixel, the third absolute difference is between the 2-pixel by 2-pixel threshold and the 2-pixel by 1-pixel threshold, and the first absolute difference is larger than the second absolute difference, setting the variable shading rate as 1-pixel by 2-pixel; and/or
- if the final variable shading rate is set as 4-pixel by 2-pixel, the third absolute difference is between the 2-pixel by 2-pixel threshold and the 2-pixel by 1-pixel threshold, and the first absolute difference is smaller than the second absolute difference, setting the variable shading rate as 2-pixel by 1-pixel; and/or
- if the final variable shading rate is set as 4-pixel by 2-pixel, and the third absolute difference is between the 4-pixel by 2-pixel threshold and the 2-pixel by 2-pixel threshold, setting the variable shading rate as 2-pixel by 2-pixel: and/or
- if the final variable shading rate is set as 4-pixel by 2-pixel, the third absolute difference is smaller than the 4-pixel by 2-pixel threshold, and the first absolute difference is larger than the second absolute difference, setting the variable shading rate as 2-pixel by 4-pixel; and/or
- if the final variable shading rate is set as 4-pixel by 2-pixel, the third absolute difference is smaller than the 4-pixel by 2-pixel threshold, and the first absolute difference is smaller than the second absolute difference, setting the variable shading rate as 4-pixel by 2-pixel.

13. The primitive adaptive variable rate shading method of any one of claims 3 to 12, wherein setting the variable shading rate according to at least the plurality of thresholds, and the third absolute difference is if the final variable shading rate is set as 2-pixel by 2-pixel, and the third absolute difference is larger than the 2-pixel by 1-pixel threshold, setting the variable shading rate as 1-pixel by 1-pixel.

14. The primitive adaptive variable rate shading method of any one of claims 3 to 13, wherein setting the variable shading rate according to at least the plurality of thresholds, and the third absolute difference is:
- if the final variable shading rate is set as 2-pixel by 2-pixel, the third absolute difference is between the 2-pixel by 2-pixel threshold and the 2-pixel by 1-pixel threshold, and the first absolute difference is larger than the second absolute difference, setting the variable shading rate as 1-pixel by 2-pixel; and/or
- if the final variable shading rate is set as 2-pixel by 2-pixel, the third absolute difference is between the 2-pixel by 2-pixel threshold and the 2-pixel by 1-pixel threshold, and the first absolute difference is smaller than the second absolute difference, setting the variable shading rate as 2-pixel by 1-pixel; and/or
- if the final variable shading rate is set as 2-pixel by 2-pixel, and the third absolute difference is smaller than the 2-pixel by 2-pixel threshold, setting the variable shading rate as 2-pixel by 2-pixel.

15. The primitive adaptive variable rate shading method of any one of claims 3 to 14, wherein setting the variable shading rate according to at least the plurality of thresholds, and the third absolute difference is:
- if the final variable shading rate is set as 2-pixel by 1-pixel, and the third absolute difference is larger than the 2-pixel by 1-pixel threshold, setting the variable shading rate as 1-pixel by 1-pixel; and/or
- if the final variable shading rate is set as 2-pixel by 1-pixel, the third absolute difference is smaller than the 2-pixel by 1-pixel threshold, and the first absolute difference is larger than the second absolute difference, setting the variable shading rate as 1-pixel by 2-pixel; and/or
- if the final variable shading rate is set as 2-pixel by 1-pixel, the third absolute difference is smaller than the 2-pixel by 1-pixel threshold, and the first absolute difference is smaller than the second absolute difference, setting the variable shading rate as 2-pixel by 1-pixel.
